# EUROPEAN PATENT APPLICATION

(11) **EP 2 087 793 A1**
(43) Date of publication of application: **12.08.2009**
(21) Application number: 08100642.1
(22) Date of filing: 18.01.2008
(51) Int. Cl.: A23G 9/34

(54) **Use of a very long chain inulin for inhibiting the growth of ice crystals in a frozen confection**

(71) Applicant: Bayer CropScience AG, 40789 Monheim (DE)
(72) Inventor: Zoerb, Hans, River Falls, Wisconsin 54022 (US)
(74) Representative: Beyer, Andreas

(57) **Abstract**

The present invention is directed to the use of a very long chain inulin with a weight average degree of polymerization of between 50 and 103 for inhibiting the growth of ice crystals in a frozen confection. The invention also relates to a method for inhibiting ice crystal growth in a frozen confection and a frozen confection with inhibited ice crystal growth.

## Description

The present invention is directed to the use of a very long chain inulin for inhibiting the growth of ice crystals in a frozen confection. The invention also relates to a method for inhibiting ice crystal growth in a frozen confection and a frozen confection with inhibited ice crystal growth.

Frozen confections are particularly appreciated for their creamy and smooth characteristics. In order to preserve the optimum organoleptic characteristics of smoothness, however, the frozen confections need to be stored and handled with care as even small temperature variations can be observed during storage, distribution, or handling. This is particularly the case when a consumer purchases a frozen confectionery and does not consume it quickly. When there is a gap between the time the frozen product is taken from the deep frozen section and placed in a domestic freezer, a partial thawing of the frozen product occurs before it is refrozen. Such cycles of temperature variation, which is known as "heat shock" cause the formation and growth of ice crystals in the product. The formation and growth of ice crystals in the product cause an undesirable crystallized texture in the frozen confectionery. The crystallized texture and the icy mouth feel, as well as the impaired appearance, reduces the overall quality of the frozen confection as perceived by the consumer.

Various gums and emulsifiers have been used as additives to the frozen confection with the aim of improving the stability, smoothness, and the heat shock resistance of aerated frozen confections. For example, U.S. Pat. No. 4,500,553 to Liggett discloses that a gum stabilizer in combination with a monosaccharide and disaccharide sweeteners contributes to limiting the growth of ice crystals upon freezing and storage of frozen confection. In addition, U.S. Pat. No. 4, 542,035 to Huang discloses that adding to the product an edible multivalent cationic electrolyte such as calcium, magnesium, aluminum, iron, manganese and the like improve stability of the frozen product.

US patent application publication US20050123666A1 discloses an aerated frozen confection having reduced ice crystal growth after heat shock, and being prepared from a composition of ingredients suitable for forming the confection and at least one emulsifier for reducing ice crystal growth after heat shock. The emulsifier is a polyol ester of a fatty acid which facilitates formation and stabilization of fat alpha crystals, the confection having an overrun of about 20% to about 250%, uniformly distributed small air cells having an average size of less than about 50 microns, ice crystals having a size of 30 microns or less after heat shock, and a smooth texture.

The problem addressed by the invention was to find further means for inhibiting the growth of ice crystals in a frozen confection.

In WO2006/108697 a very long chain inulin with a weight average degree of polymerization DPw of between 54 and 61 is described as a food additive that imparts beneficial usage properties to several foodstuffs as for example viscosity building and prebiotic effect. Ice cream is mentioned as an exemplary foodstuff containing said inulin. US20050123666A1 teaches that inulin can be added to the frozen confection as a freezing point depressant.

Surprisingly it was found out by the present inventors that inulin with a weight average degree of polymerization of between 50 and 103 is suitable for inhibiting the growth of ice crystals in a frozen confection. Thus, the present invention relates to the use of an inulin with a weight average degree of polymerization of between 50 and 103 for inhibiting the growth of ice crystals in a frozen confection.

Further objects of the present invention are a method for inhibiting the growth of ice crystals in a frozen confection, a frozen confection with inhibited ice crystal growth comprising an inulin with a weight average degree of polymerization of between 50 and 103, and a method for producing a frozen confection with inhibited ice crystal growth. These objects are defined in the appended claims and explained in more detail in the following description of the invention.

A further benefit of the inventive solutions is that the taste of the frozen product has a smooth and favorable texture, increased viscosity and body. Besides the inhibition of growth of ice crystals in a frozen confection, very long chain inulin can at the same time act as a fat substitute in low caloric ice creams and as a viscosity building agent.

For sake of brevity, inulin with a weight average degree of polymerization of between 50 and 103 and any other inulins which are described in the present description are hereinafter also referred to as "Very long chain inulin" or "VLCI". The term "inulin" is intended to mean in connection with the present invention a polyfructan which consists of a beta-2-1-linked chain of fructose molecules. This chain preferably, but not necessarily, has at its end a reducing alpha-D-glucose unit.

The very long chain inulin which is used in the present invention has a weight average degree of polymerization DP_{w} of between 50 and 103 and a number average degree of polymerization DPn of between 41 and 84. The terms DPw and DPn used in the present disclosure are defined as in application WO 2006/108697 and measured by GPC-RI-MALLS, the method also disclosed in WO 2006/108697. In this connection and in connection with the present invention, the term "between" is also intended to include the respectively indicated numerical limits.

As far as DPw is concerned, very long chain inulin as used in the present invention has in a preferred embodiment an average degree of polymerization DPw of between 54 and 61, preferably between 55 and 60, particularly preferably between 56 and 57. In a another preferred embodiment, very long chain inulin which is used in the present invention has an average degree of polymerization DP_{w} of between 65 and 81, preferably between 65 and 79, even more preferably between 66 and 78, very particularly even more preferably between 66 and 76, yet more preferably between 66 and 74 and most preferably between 66 - 73. In a still another preferred embodiment, very long chain inulin which is used in the present invention has an average degree of polymerization DP_{w} of between 83 and 103, preferably between 84 and 100, more preferably between 83 and 98, even more preferably between 85 and 98, yet more preferably 85 and 95, still more preferably between 86 and 97 and most preferably between 86 and 94.

As far as DPn is concerned, very long chain inulin as used in the present invention has in a preferred embodiment an average degree of polymerization of between 44 and 48, preferably between 45 and 48, particularly preferably between 46 and 48. In a another preferred embodiment, very long chain inulin which is used in the present invention has an average degree of polymerization DPn of between 54 and 75, preferably between 54 and 72, even more preferably between 57 and 71, particularly preferably between 60 and 71. In a still another preferred embodiment, very long chain inulin which is used in the present invention has an average degree of polymerization DPn of between 66 and 89, preferably between 68 and 85, particularly preferably between 70 and 85 and even more preferably between 72 and 84.

Especially preferred according to the present invention are very long chain inulins with following characteristics:
(1) DPw of between 50-103 and DPn of between 41-85
(2) DPw of between 55-100 and DPn of between 45-84
(3) DPw of between 60-95 and DPn of between 50-81
(4) DPw of between 54-6 and DPn of between 44-48
(5) DPw of between 55-60 and DPn of between 45-48
(6) DPw of between 56-57 and DPn of between 46-48
(7) DPw of between 65-81 and DPn of between 54-75
(8) DPw of between 65-79 and DPn of between 54-72
(9) DPw of between 66-78 and DPn of between 57-71
(10) DPw of between 66-76 and DPn of between 60-71
(11) DPw of between 83-103 and DPn of between 66-89
(12) DPw of between 84-100 and DPn of between 68-85
(13) DPw of between 83-98 and DPn of between 70-85
(14) DPw of between 85-98 and DPn of between 72-84
(15) DPw of between 85-95 and DPn of between 72-81

An embodiment of very long chain inulin for use in the present invention which is particularly advantageous in its properties and which may include the characteristics of the previously described very long chain inulins has a particularly narrow molecular weight distribution expressed by the quotient between the weight average degree of polymerization and the number average degree of polymerization DPw/DPn. This quantity is also referred to as polydispersity index. In a preferred embodiment, the quotient DPw/DPn is less than 1.25, in a more preferred embodiment is less than 1.20, in an even more preferred embodiment is less than 1.15 and in the most preferred embodiment is less than 1.10. The values for DPw and DPn are in this connection measured by the method of "gel permeation chromatography with light scattering and refractive index detection (GPC-RI-MALLS system)" described in WO 2006/108697. The molecular weight of a monomer for conversion calculations is set equal to 162 g/mol.

In a beneficial embodiment very long chain inulin which is used to the present invention has a molecular weight distribution of from 1620 g/mol to 40 000 g/mol, preferably from 2268 g/mol to 32 000 g/mol, particularly preferably from 2592 g/mol to 29 160 g/mol. In a another preferred embodiment, very long chain inulin which is used in the present invention has a molecular weight distribution in the range from 650 to 48 000, more preferably 970 to 40 000 g/mol, even more preferably 1300 g/mol to 34 000 g/mol and most preferably from 4000 g/mol to 26 800 g/mol. In still another preferred embodiment, very long chain inulin for use in the present invention has a molecular weight distribution in the range from 650 to 48 000, more preferably 970 to 40 000 g/mol, even more preferably 1300 g/mol to 34 000 g/mol and most preferably from 4000 g/mol to 26 800 g/mol.

In one embodiment of the very long chain inulin the degree of branching is 0.5-2.0 mol%, more preferably 0.7-2.0 mol%, even more preferably 0.9 to 2.0 mol% and most preferably 1.1 to 2.0 mol%. The degree of branching is defined herein as the percentage number of beta-2-1-linked fructose monomers with additional branch point at position 6 of the fructose monomer (also abbreviated to "2-1,6-" hereinafter) based on the total number of all inulin monomers measured in a sample of the very long chain inulin with randomly distributed molecular weights. At its position 6, a "2-1,6-" fructose monomer within a polyfructose chain is linked to another polyfructose chain, consisting of at least two beta-2-1-linked fructose monomers, or to a single fructose monomer. The term "branch point" designates a position of a fructose monomer, within a polyfructose chain, to which another polyfructose chain consisting of at least two beta-2-1-linked fructose monomers, or a single fructose monomer is linked. The degree of branching is measured by the method of standard methylation analysis or alternatively by the method of reductive degradation after methylation. Both methods are described in detail in copending applications PCT/EP2007/004028, PCT/EP2007/004029, US 60/796,818, US 60/796,819.

Especially preferred in connection with the present invention are very long chain inulins as disclosed in WO 2006/108697, WO/2007/128559, WO/2007/128560, US 60/796,818 and US 60/796,819, which are incorporated by reference in their entirety.

The aforedescribed very long chain inulins of the present invention can be prepared from artichoke roots as disclosed in WO 2006/108697, WO/2007/128559, WO/2007/128560, US 60/796,818 and US 60/796,819.

A process for preparing very long chain inulin from artichoke roots is characterized by following steps:
a) artichoke roots are comminuted
b) an extract is obtained by treating the comminuted roots with water,
c) coloring constituents are removed from the extract obtained,
d) inulin is precipitated from the extract,
e) the inulin is reprecipitated at least once.

Artichoke roots are used as starting material, but the process is not restricted to a particular variety. The comminution is advantageously preceded by removing any adherent contaminants from the roots, e.g. by vigorous washing with water with a high-pressure cleaner. It is advantageously possible to wash the roots in the deep-frozen state in order to minimize the loss of mass of root material.

If necessary, the roots are initially comminuted coarsely, e.g. by chopping. Shredders are preferred for the further comminution. The product obtained is comminuted root material in the form of fibrous chips.

After the comminution, the comminuted root material is extracted with water, preferably at a temperature of 60°C to 95°C, most preferably 80-95°C. The extraction preferably takes place in the neutral to slightly alkaline pH range. A temperature of at least 60°C at pH 7-9 is advantageous because in this case enzymatic and acidic hydrolysis are suppressed. The concentration of comminuted root material in the water is preferably 10-40 % by weight, more preferably 20 - 30 % by weight, measured as fresh weight of roots based on the total weight of the extraction mixture.

Preferably a ratio between the dry matter of the shredded material used and the water as extraction medium is established which leads to a dry matter content in the extract of 8 - 12 % by weight and an inulin content of more than 6 % by weight, preferably 6 - 8 % by weight, based on the weight of the extract. A correspondingly suitable choice of extraction conditions, such as the ratio of water to root weight, can lead to a transfer of 80 - 90 % by weight of the inulin present in the roots into the extract. The aforementioned conditions are suitable to achieve a favorable crystallization and a high yield of the inulin from the extract, based on the observation that the high molecular weight inulin crystallizes from the extract even at a concentration as low as 5% by weight, based on the weight of the extract.

There is no special restriction on the extraction equipment, and conventional extraction techniques for plant material can be applied. It is most preferred for the extraction to take place in a jacket-heated extractor with agitator. In another highly preferred embodiment a heatable lauter tun is used as stirred extractor. Thus, the extraction of the inulin from the roots is combined with the separation of the extract from the spent chips by filtration, as described below. The extraction time after equilibration of the root/water mixture is preferably 30 min - 4 hours, preferably 1-2 hours. After this time, the extract is separated from the spent chips, e.g. by pumping off or straining off or filtration.

After separation of the extract from the spent chips, where appropriate, fibrous materials and plant fragments may remain as suspended materials in the extract. If present, these suspended materials are likewise removed from the extract. In this variant of the process, step b) of the process is thus followed, before step c), by a step in which suspended materials, mainly consisting of fibers, are removed from the extract. The acceptable amount of suspended materials and whether removal is to take place will be decided by the skilled worker from case to case. Removal of the suspended materials can take place by conventional separation techniques, as centrifugation or filtration. A desludging separator has proved particularly suitable. A screen or filter with appropriate fineness can also be used.

In a highly preferred embodiment, the suspended material can be filtered off by using the spent chips as a filter material. In this embodiment the spent chips are precipitated at the bottom of the extraction vessel equipped with a sieve at the bottom, like a lauter tun. The sieve is preferably a slit sieve. The precipitated spent chips are used as a filtration bed through which the extract flows. By using this technique a nearly quantitative removal of suspended material is possible without using further filtration steps before further refining or brightening the extract or crystallizing the inulin.

The extracts are colored owing to their content of coloring constituents and colloidally suspended colorized matter. The coloring constituents consist, inter alia, of tannins and flavanoids and usually confer a yellow or brownish yellow and/or dark brownish color on the extract. The inulins which can be obtained directly from such extracts do not comply with the desired requirements concerning a neutral color. It is therefore necessary to remove the coloring constituents from the extract in step c) of the process. Process step c) for removing coloring constituents from plant extracts is generally also referred to as decolorization, clarification or "brightening" of plant extracts. These terms are equivalent in the context of the present invention.

The brightening can take place by adding lime and subsequent carbonation (CO₂ addition). The process of lime addition is known from the prior art and is used for example in obtaining sucrose from sugar beet. In an alternative brightening process, the interfering constituents are removed using an ion exchanger. Another useful process for removing coloring constituents by admixing magnesium ions (Mg²⁺) and an alkaline component to the plant extract is disclosed in co-pending applications PCT/EP2007/004028, PCT/EP2007/004029, US 60/796,818 and US 60/796,819. The whole of step c) may if required also be carried out more than once.

After step c), inulin is precipitated from the extract in step d). The precipitation can be effected for example by adding alcohols such as ethanol, methanol or isopropanol. In this case, depending on the amount of alcohol added or adjusted polarity of the liquid phase, initially high molecular weight inulin fractions are precipitated, so that it is possible to influence, via the amount of alcohol added, how quantitatively the inulin present in the extract is precipitated and which molecular weight fractions are predominantly obtained. Besides alcohol, it is also possible to employ other nonpolar organic liquids which are miscible with water.

For this purpose, in a particularly advantageous embodiment of this process step, to limit the use of alcohol, especially ethanol and isopropanol, the prepared extract is initially concentrated, preferably to one fourth to one fifth of its initial volume. The concentration can take place by evaporation or membrane filtration and a combination of both processes. Care must be taken in this case that the concentrate is kept hot during the concentration, preferably at 60-95°C, in order to avoid precipitation of the inulin. An advantage of membrane filtration is the depletion, associated therewith, in low molecular weight substances accompanying the inulin. The subsequent precipitation of the inulin from the concentrate can be managed by the choice of increasing alcohol concentration so that the inulin is fractionated according to molecular size ranges which are characterized for example by the weight average degree of polymerization (DPw). Depending on the choice of the precipitation conditions, the result is fractions which have the DPw as described above.

It is more preferred to obtain inulin by cooling the extract than by alcoholic precipitation. The preferred conditions are such that the extract is cooled to a temperature of 2 - 10°C, more preferably 2 - 8°C, and kept at this temperature over a period of from 6 to 140 h, preferably 6 to 48 h, during which the inulin precipitates. The cooling rate and temperature, and the duration of the cooling influences the precipitation of the inulin from the extract and the breadth of the molecular weight distribution and thus at the same time the quantity. Choice of a longer period and lower temperature results in precipitation of more low molecular weight inulins and a broader molecular weight distribution and thus a lower average molecular weight of the precipitated fraction. The precipitated inulin is separated from the liquid phase by conventional separation techniques such as, for example, centrifugation, decantation, filtration.

In a preferred embodiment, inulin is crystallized for the first time after the extraction step b) and before step c) of the above described process. Such crystallisation is preferably done as described previously. Crystallization before step c) leads to an increase in the yield of high molecular weight inulin compared with direct brightening of the extract, and economizes the use of the brightening agents, i.e. magnesium compound and the alkaline component. It is advantageous to brighten the extract after the first crystallization of the inulin as in this case only the coloring constituents bound to the inulin crystals have to be removed, which leads to a similarly smaller amount of inulin bound to the brightening sludge.

A first precipitation and removal of the precipitated inulin can be followed by renewed cooling of the extract or addition of alcohol in order to obtain any inulin fractions which are still dissolved. A decision about repetition is made from case to case according to how quantitatively the inulin is to be obtained from the plants and what molecular weight distribution in the final product is desired.

The inulin concentration in the extract depends substantially on the inulin content of the roots and the concentration of the comminuted roots in the extract and is a further variable which has an effect on the precipitation of the inulin by cooling the extract. The dependence of the precipitation on the concentration can therefore be utilized in order to concentrate the liquid phase after the first precipitation, e.g. by evaporation, in order also to precipitate the low molecular weight fractions if this is desired.

In the last process step e), the precipitated inulin is reprecipitated. "Reprecipitation" means that the solid inulin, resulting from the previous process step, is redissolved and then precipitated and/or crystallized out of the solution again. Thus, process step e) can also be worded as: the inulin is dissolved and precipitated and/or crystallized again, wherein this step is done at least once. The crystallization differs from the precipitation in that predominantly crystalline structures are obtained.

The inulin is preferably dissolved under the influence of heat and preferably in water. Water with a temperature of 70-100°C, in particular 90-100°C, is particularly suitable.

The precipitation in step e) can take place by alcoholic precipitation as previously described. However, the inulin is preferably obtained by cooling the solution to 2 - 10°C, more preferably 2-8°C, over a period of 6 to 140 h, preferably 6 to 48 h.

The precipitation of the inulin dissolved in step e) can be repeated in order to obtain the inulin still remaining in the liquid phase. A decision about repetition is to be made from case to case according to how quantitatively the inulin is to be obtained from the plants and what molecular weight distribution in the final product is desired. The liquid phase can be concentrated in order to simplify the precipitation.

After reprecipitation, the resulting inulin solid is separated from the liquid phase by conventional separation techniques such as, for example, centrifugation, decantation, filtration.

In order to influence the molecular mass distribution and purity of the resulting inulin product, process step e) can be carried out more than once. It has emerged that the averages of the molecular weight and the averages of the degree of polymerization are shifted to higher values on repetition of the reprecipitation step e). It is thus possible to set various averages of the molecular weight/degree of polymerization of the very long chain inulin as described above within the described range.

If fine-particle impurities are still present, it is advantageous to insert one or more filtration steps into the process. Any fine-particle impurities present are removed in the filtration. The fineness of the filter is chosen by the skilled worker depending on the particle size of the impurity.

The filtration step(s) can be inserted anywhere in the process after obtaining the extract. A filtration step directly after obtaining the extract in step b) for example is advantageous. The filtration step is to be distinguished from the removal of suspended materials as described previously, because the particles removed by the filtration are finer than the suspended materials, which consist mainly of fibers. In a further preferred embodiment, the filtration step is carried out before step d).

The filtration step is preferably combined with a reprecipitation as described for process step e). This entails the inulin being dissolved as previously described for step e), and the solution then being filtered. After the filtration, the inulin is precipitated or crystallized out of the filtered solution. The solid inulin resulting after the precipitation or crystallization can be separated from the liquid phase by conventional separation techniques, such as, for example, centrifugation, decantation and filtration.

In some cases the resulting inulin can be discolored by substances which can not be removed by filtration. In such cases it is preferred to remove the coloring impurities by a treatment with activated carbon. In one embodiment active charcoal is suspended in water and added to an inulin solution at a temperature of above 80°C, preferably above 90°C. In case of a 20 % by weight inulin solution the amount of active carbon is preferably in a range of 1 - 10 % by weight, preferably 2 - 6 % by weight, more preferably 2 - 3 % by weight, based on the weight of the inulin solution. After adsorption of the coloring impurities, the activated carbon is removed by centrifugation and/or filtration. The activated-carbon suspension can be preclarified by centrifugal separation of the activated-carbon sludge and then clarified by two-stage filtration, for example with a combination of a kieselguhr precoat filter and a sheet filter. It is important that during the separation of the active charcoal from the inulin solution the temperature is maintained above 80°C, preferably above 90°C, in order to keep the inulin in solution. After removal of the active charcoal, the inulin can be precipitated or crystallized and separated from the liquid phase as described above.

After separation from the liquid phase, the final product can be washed again with water or a water/alcohol mixture. Washing with cold water at a temperature of 2-10°C is preferred. For this purpose, the inulin precipitate is slurried in water and the inulin is then sedimented again.

The resulting inulin is preferably dried in a further, last process step. The drying can take place by freeze drying, spray drying or drum drying. In a preferred embodiment, the inulin is in spray-dried form. It is self evident that in case of a spray drying process a precipitated or crystallized inulin must be brought into suspension (in water below about 80°C) or into solution (in water above about 80°C) again. Alternatively, a last precipitation or crystallization step, as described above, can be omitted and the suspended or dissolved inulin from the process can directly be spray dried. It is possible by adding spray-dried inulins to liquid prepared food products for the viscosity to be increased particularly effectively.

It has surprisingly been found that a frozen confection with inhibited ice crystal growth can be produced by adding a very long chain inulin as previously described to the ingredients for forming a frozen confection.

The terms "inhibited growth of ice crystals" or "inhibition of ice crystal growth" of the present invention in one sense mean that the ice crystal growth in a frozen confection comprising very long chain inulin is retarded in comparison to a frozen confection not comprising very long chain inulin when both confections are treated in the same manner and/or stored under same conditions for the same period of time. In this sense, said terms mean that the ice crystal size in a frozen confection comprising very long chain inulin is reduced in comparison to a comparative frozen confection not comprising very long chain inulin when both confections are treated in the same manner and/or stored under same conditions for the same period of time.

The term "ice crystals" designates crystals comprising frozen water as the predominant component.

The inhibition of ice crystal growth occurs in a frozen confection comprising very long chain inulin during shelf life of said confection. Particularly, ice crystal growth is inhibited when said confection is during its shelf life subjected to temperature fluctuations related to the storage and transportation of frozen confection, particularly ice cream, ice milk, yogurt, or water ice product. Said temperature fluctuations can be simulated by a temperature cycling process, comprising: holding the confection at 25°C for 24 h, transferring the confection to -15°C and holding for additional 24 h, returning to -25°C, wherein this sequence of steps is repeated four times. Any other testing method commonly used in the industry for evaluating the effect of temperature fluctuations on ice cream may also be employed. Above mentioned temperature fluctuations or temperature cycling process are commonly designated as "heat shock" or "temperature abuse".

In one aspect, the present invention relates to a method for inhibiting the growth of ice crystals in a frozen confection, the method comprising adding to the ingredients for forming a frozen confection a very long chain inulin with a weight average degree of polymerization of between 50 and 103, or preferably any other very long chain inulin as previously described.

The very long chain inulin is added in an amount that is sufficient to inhibit crystal growth. Preferably, the very long chain inulin is added in an amount of 0.1 % to 8 % by weight, more preferably 0.1 % to 5 % by weight, most preferably 0.5 % to 4 % by weight of the total composition for forming the frozen confection. Another preferred range is 1.5 % to 2.6 %. The term "total composition" means the total composition of ingredients for forming the frozen confection.

In a further aspect, the present invention relates to a frozen confection with inhibited ice crystal growth comprising a very long chain inulin with a weight average degree of polymerization of between 50 and 103, or preferably any other very long chain inulin as previously described. A preferred ingredient composition for forming the frozen confection comprises a fat present in an amount of 0.1 % to 18 % by weight, more preferably 1 % to 10 % by weight of the total composition; a sweetener present in an amount of 2 % to 25 % by weight, more preferably 5 % to 20 % by weight of the total composition; and non-fat milk solids present in an amount from 6 % to 15 % by weight, more preferably 8 % to 12 % by weight of the total composition. Very long chain inulin is added in an amount as already described above.

Another preferred ingredient composition for forming the frozen confection comprises a fat present in an amount of 0.1 % to 18 % by weight, more preferably 1 % to 10 % by weight of the total composition; a sugar, preferably glucose or sucrose, present in an amount of 5 % to 15 % by weight of the total composition; an alternative sweetener other than glucose or sucrose present in an amount of 3% to 8% by weight of the total composition and non-fat milk solids present in an amount from 6 % to 15 % by weight, more preferably 8 % to 12 % by weight of the total composition. Very long chain inulin is added in an amount as already described above.

Still another preferred ingredient composition for forming the frozen confection, which is preferably a low fat ice cream, comprises 0.2 % - 5 % by weight, preferably 0,5 % - 4 % by weight fat, 40 % - 85 % by weight, preferably 50 % - 80 % by weight milk, preferably whole milk, 0 %- 8 % by weight, preferably 0 % - 7 % by weight non-fat dry milk, 0 % - 25 % by weight, preferably 0 % - 20 % by weight condensed skim, 2 % - 20 % by weight, preferably 5 % - 15 % by weight sugar, 0.1 % - 5 % by weight, preferably 0.5 - 4 % by weight very long chain inulin as described above.

The fat used may be a dairy fat, a non-dairy fat, or a mixture of both. When the fat is a dairy fat, it may be for instance, any milk fat source such as butter oil, butter, real cream, or a mixture thereof. When the fat is a non-dairy fat it may be, for instance, an edible oil or fat, preferably a vegetable oil such as coconut oil, palm kernel oil, palm oil, cotton oil, peanut oil, olive oil, soy bean oil, rapeseed, olive, hydrogenated coconut oil, hydrogenated soybean oil, palm olein etc., or mixtures thereof.

The non-fat milk solids may be of whey origin, for example powdered or concentrated defatted sweet whey or powdered or concentrated skim milk. The non-fat milk solids may also be derived from a commercial mixture of milk powder and whey proteins, whose functionality has been modified by specific denaturation treatments.

The sugar used may be sucrose, glucose, fructose, lactose, dextrose, trehalose, invert sugar either crystalline or liquid syrup form, or mixtures thereof.

The sweetener may be a corn sweetener in either a crystalline form of refined corn sugar (dextrose and fructose), a syrup, as glucose syrup, maltose syrup, or a dried corn syrup (corn syrup solids), a liquid corn syrup, a maltodextrin, glucose, or a mixture thereof.

An emulsifier can be present as a further ingredient in the frozen confection. For example, the emulsifiers include but are not limited to saturated mono-diglyceride, sorbitan tristearate ("STS"), sorbate, lactylated monoglycerides, acetylated monoglycerides, unsaturated monoglycerides, including monoglycerides with oleic acid, linoleic acid, linolenic acid, or other commonly available higher unsaturated fatty acids. The emulsifier blend should be present in an amount of about 0.01% to about 5%, preferably of about 0.04% to about 1%, and more preferably of about 0.2% to about 0.5% by weight of the total composition for forming the frozen confection.

A stabilizer can be present as a further ingredient in the frozen confection. The stabilizer may be, for instance, a hydrocolloid such as agar, gelatin, gum acacia, guar gum, locust bean gum, gum tragacanth, carrageenan and its salts, carboxymethyl cellulose, sodium alginate or propylene glycol alginate, or any mixture of hydrocolloids, carob flour, guar flour, alginates xanthan, starches. Preferably the stabilizer is present in an amount of about 0.1% to about 0.5% by weight of the total composition for forming the frozen confection.

In another aspect of the invention is provided a soft frozen confection. The term "soft" as used herein means that the frozen confection is scoopable at a temperature of -18° C or less. The term "scoopable" is used in its ordinary meaning in that the ice cream is sufficiently soft at freezer temperatures so that it can be scooped from a container by hand or extracted from a cartridge at that temperature for placement in a dish or cone as contrasted to a solid frozen block from which the confection is difficult to separate and remove. Thus, the invention provides a frozen confection which is easily scoopable after being taken from a home freezer by a consumer. In this regard, the frozen confection comprises at least one freezing point depressant. Suitable freezing point depressants include polyols such as sorbitol, mannitol, lactilol, xylitol, maltitol, glycerol, ethanol, and mixtures thereof. Preferably, the freezing point depressant is glycerol or ethanol. Other freezing point depressants include sucrose, dextrose, tagatose, fructose, glucose syrup, polydextrose, preferably corn syrup of a dextrose equivalent (DE)>40, or a mixture thereof. The freezing point depressant softens the frozen confection thereby making it sufficiently soft to scoop from a container or receptacle at a temperature of about -18° C or less. Preferably, the freezing point depressant is present in an amount of about 0.5 to about 5% by weight of the frozen confection. Thus, a soft, scoopable frozen confection in which the freezing point has been reduced by the addition of freezing point depressants, and provides a scoopable ice cream having inhibited ice crystal growth. Furthermore, as an added benefit of using a freezing point depressant is that a frozen confection may be produced having less fat, which enables manufacture of a less expensive confection such as ice cream, or alternatively, manufacture of an ice cream with reduced calories but which has the same softness and texture as a conventional high-fat ice cream.

The composition for forming the frozen confection may further contain ingredients which are selected from one or more members of the group consisting of colorants, mineral salts, flavorings, flavor modifiers, flavor enhancers, thickening agents, egg yolk, egg white, fruit juices and fruit syrups, as well as inclusions, such as but not limited to fruit or fruit pieces, for example, nuts, hazelnuts, whole or in pieces, or pieces of chocolate.

The term "frozen confection" as used herein, unless otherwise indicated, means ice cream, preferably a milk ice cream, water ice, yogurt, frozen yogurt, sherbert, fruit ice, low fat ice cream, ice milk, frozen fruit juice etc. The mixture suitable for a frozen product may be any conventional mix such as an ice cream mix, a frozen yogurt mix, a water ice mix, a fruit juice mix, a sherbet mix, or a combination thereof containing very long chain inulin as described above. An ice cream mix may contain fat, non-fat milk solids, carbohydrates, or stabilizers together with water and, if desired, other conventional ingredients, such as mineral salts, colorants, flavorings, inclusions, etc. A water ice mix comprises fruit juices, sugar, stabilizer, and small amounts of milkfat and non-fat milk solids.

In another aspect of the invention, the frozen confection is a "light" frozen confection. The term "light frozen confection" as used herein is intended to mean a frozen confection having a reduced calorie value. Advantageously, the light frozen confection of the present invention shows inhibited ice crystal growth after being exposed to temperature fluctuations, but also presents a smooth, and creamy, texture, a feature often lacking from conventional low calorie frozen desserts. This is due to the fact that very long chain inulin does not only act as an inhibitor of the growth of ice crystals but also acts as a fat or oil substitute with improved organoleptic properties (mouthfeel) and as a texturizing agent in the frozen confection. A preferred frozen confection having a reduced calorie value is a low fat ice cream, preferably with a fat content of equal or lower than 5% by weight, more preferably of equal or lower than 3% by weight of the total composition. In the same manner, the use of very long chain inulin for inhibing the growth of ice crystals in a frozen confection relates in a preferred embodiment to a low fat ice cream as defined above. The method for inhibiting the growth of ice crystals and the method for producing a frozen confection according to the appended claims in a preferred embodiment also relate to a frozen confection which is a low fat ice cream as defined above.

Very long chain inulin (VLCI) produces ice cream mixes with increased viscosity and body. Ice cream resulting from these mixes can resemble higher fat ice creams depending on fat content, solids and accompanying carbohydrates. VLCI is particularly effective in achieving a fat-like quality in ice cream. Where 3-4 % by weight chicory inulin with lower DP than VLCI can be required to act as a fat mimetic, VLCI is effective at levels between 1.5-2.6 % by weight, based on the total composition. Low fat ice cream with VLCI at levels of 1.5-2.6 % by weight in the mix is smoother and more like ice cream with 10 % fat. In fact VLCI levels of less than 2.6 % by weight might be optimal for low fat ice cream depending on solids and sugar levels and the amount of time the mix is allowed cure prior to freezing.

Additionally to very long chain inulin as a fat substitute, a frozen confection of the invention may also comprise a fat that is rich in polyunsaturated fatty acid. Suitable oils may be non-hydrogenated vegetable fats such as those high in oleic oils, or those having blends containing long-chain polyunsaturated fatty acids such as gammalinolenic, docosahexaenoic, and eicospentaenoic acids. Thus, the low saturated fat may be obtained from sources such as seeds, sunflower, canola, safflower, rapeseed, soy, rice, borage, nuts including walnuts, almonds, macadamia, coconut, palm, palm kernal, apricot kernal, and other plants including olive, and peanut, or fish or microbial oils.

In a further aspect, the present invention relates to a method for producing a frozen confection with inhibited ice crystal growth during shelf life and/or temperature abuse, the method comprising: adding to the ingredients for forming a frozen confection a very long chain inulin with a weight average degree of polymerization of between 50 and 103, or preferably any other very long chain inulin as previously described; combining the very long chain inulin and the other ingredients with shear mixing to form a composition; pasteurizing and homogenizing the composition; and freezing the composition.

The composition of a frozen confection, which is produced by such method, the kind of ingredients, the amounts of ingredients, including very long chain inulin, are preferably chosen as already described above with respect to the frozen confection.

In one embodiment of the method, the preparation of frozen product of the invention can be carried out using conventional equipment for ice cream manufacture. The first step comprises combining the ingredients and the very long chain inulin under shear mixing to disperse and/or solubilize the ingredients to form a composition which is preferably an already homogeneous mass. One of ordinary skill in the art with little or no experimentation can determine mixing time and conditions to obtain the desired homogeneous mass.

In the next steps, the composition is pasteurized and homogenized. First the pasteurization can be carried out and subsequently the homogenization or vice versa. It is more preferred to do the pasteurization step first.

Pasteurization of the composition is conducted under conditions commonly used in the industry. Pasteurization equipment can be a MicroThermix^{™} fluid processor. The pasteurization step is conducted at a temperature of about 60° C to about 100°C, preferably at about 75°C to about 85°C, for a time of about 10 seconds to about 30 minutes, preferably for at least about 25 seconds. Preferably, pasteurization is conducted by either high temperature short time (HTST) or low temperature long time (LTLT) processing. If necessary, the composition may be homogenized under high shear before pasteurization in order to prevent a "graininess" or "sandyness" of the mixture.

The composition is conventionally homogenized, e.g., in a two stage homogenizer. The first stage is conducted at a pressure of about 70 bar to about 250 bar, preferably of about 100 bar to about 150 bar, more preferably about 140 bar. The second stage is conducted at a pressure of about 0 bar to about 50 bar, preferably of about 20 bar to about 35 bar. Homogenization is done at a temperature of about 62°C to about 75°C.

So, if homogenization is conducted before pasteurization, the composition is preheated after shear mixing to a temperature of about 62°C to about 75°C. If homogenization is conducted after pasteurization, the composition is cooled down to said temperature after pasteurization.

A composition pasteurized and homogenized under standard processing conditions results in a smooth viscous blend. Homogenization not only reduces the size of hydrated VLCI particles but also contributes to hydration itself.

The pasteurization and homogenization step is followed by cooling the composition to a temperature of about 0°C to about 10°C, and preferably at about 4°C. The mix is preferably aged by allowing to stand at a temperature of about 0° C to about 6° C, preferably of about 1° C to about 5° C and for a time of about 1 hour to about 24 hours, preferably of about 2 hours to about 18 hours and more preferably of about 4 hours to about 12 hours. The mix is then colored and flavored as needed.

Optionally the composition may be aerated to create fine air cells within the composition. Aeration can be done as disclosed in US patent application publication US20050123666 A1. If aerated, the frozen product shows preferably an overrun of about 20% to about 120% for ice cream products and an overrun of about 5% to about 50% for water ice products. Overrun means the % increase in volume of frozen product greater than the volume of mix/composition used to produce that frozen product.

Subsequently, the frozen product is packaged into bulk containers, extruded for bars or cones, or packaged into small containers. Bulk containers include container sizes of 3 gallons to 0.5 L, and small containers include container sizes of 250 ml to 50 ml.

The frozen products may afterwards be stored at a freezing temperature, usually at a temperature in the range of about -25°C to about -35°C, preferably of about -28°C to about -32°C, and more preferably at about -30°C.

If desired, the product can be repackaged before shipping. Also for individual sized portions the frozen products may be coated, for instance with chocolate or a compound coating. Compound coatings include coatings which do not contain 100% cocoa fat and coatings that contain any vegetable oil, such as canola oil, corn oil, soy oil, coconut oil, etc., or mixtures thereof. These coatings may also contain inclusions such as nut pieces, fruit pieces, rice crisps, or other additives therein. Furthermore, the frozen product may be placed between cookies, or other edible substrates to form ice cream sandwiches or the like. The final frozen products are then packaged and stored at a freezing temperature.

### DESCRIPTION OF THE FIGURES:

Figure 1: Effect of VLCI on HTST pasteurized and homogenized ice cream mix.
Figure 2: Over run and melt characteristics of low fat ice cream with VLCI
Figure 3: Ice crystals in temperature abused, 3% fat ice cream with and without VLCI
Figure 4: Ice crystal growth in the three ice cream variables stored at -25°C (8 weeks) and - 17°C (4 weeks) and samples cycled between -25°C and -15°C.

### EXAMPLES

Hereinafter, the present invention is illustrated by working examples, which are intended to show the general idea of the invention, but which are not to be understood to restrict the scope of protection as defined by the appended claims.

### Example 1 - Low Fat Ice Creams with very long chain inulin (VLCI) - Batch process

Ice cream and low fat ice cream formulas with VLCI DPw 75-81:

| | **1** | **2** | **3** | **4** | **5** | **6** |
|---|---|---|---|---|---|---|
| Cream 40% | 24.78% | 0.22% | 0.67% | 0.67% | 0.56% | 0.67% |
| Whole Milk | 56.39% | 78.68% | 73.87% | 73.87% | 75.07% | 73.87% |
| Non-fat Dry Milk | 4.64% | 6.92% | 7.28% | 7.28% | 7.19% | 7.28% |
| Sucrose | 14.00% | 14.00% | 14.00% | 14.00% | 14.00% | 14.00% |
| VLCI ¹⁾ | -- | -- | 4.00% | -- | 3.00% | 4.00% |
| Chicoree inulin (DPw 33) | -- | -- | -- | 4.00% | -- | -- |
| Stabilizer²) | 0.18% | 0.18% | 0.18% | 0.18% | 0.18% | 0.18% |
| *TOTAL* | *100 %* | *100 %* | *100 %* | *100 %* | *100 %* | *100 %* |
| | | | | | | |
| % Fat | 12.00% | 3.00% | 3.00% | 3.00% | 3.00% | 3.00% |
| % SNF | 10.77% | 13.65% | 13.60% | 13.60% | 13.61% | 13.60% |
| % Total Solids | 36.95% | 30.83% | 34.78% | 34.78% | 33.79% | 34.78% |

| | | | | | | |
|---|---|---|---|---|---|---|
| 1) very long chain inulin, DPw 75-81 (determined by GPC RI-MALLS) 2) Keystone 9185, Mainstreet Ingredients, guar gum, xanthan gum, carrageenan, polysorbate 80, mono and diglycerides | | | | | | |

Batches were not normalized for total or solids not fat (SNF) content. They were designed to measure the effect of inulin (VLCI and Chicoree inulin) on mix viscosity.

### Example 2 - Low Fat Ice Cream with very long chain inulin (VLCI)

Ice cream compositions:

| INGREDIENT LIST (%) | 10% Fat Control | 3% Fat Control | VLCI¹⁾ 3% Fat |
|---|---|---|---|
| Cream | 21.56 | 2.31 | 2.54 |
| Whole milk | 48.87 | 57.34 | 55.00 |
| Condensed Skim | 14.91 | 21.19 | 21.70 |
| Sucrose | 14.50 | 10.00 | 10.00 |
| Corn Syrup Solids (36DE) | - | 9.00 | 8.00 |
| VLCI | - | - | 2.60 |
| Stabilizer/Emulsifier | 0.16 | 0.16 | 0.16 |
| Vanilla | 0.8 | 0.8 | 0.8 |
| *TOTAL* | *100* | *100* | *100* |
| | | | |
| % Serum Solids | 11.04 | 13.07 | 13.07 |
| % Fat | 10.00 | 3.00 | 3.00 |
| % Total Solids Not Fat | 25.70 | 32.23 | 33.73 |
| % Total Solids | 35.70 | 35.23 | 36.73 |

| | | | |
|---|---|---|---|
| 1) very long chain inulin, DPw 59 (determined by GPC RI-MALLS) | | | |

### Process - Mix

2. Milk, condensed skim and cream were blended in a lightning mixer.
3. VLCI, stabilizer, sugar and corn sweeteners were blended and added to the milk with rapid blending to prevent lumping.
4. The raw ice cream mix was pasteurized in a MicroThemix^{™} fluid processor at 82°C for 25 seconds and homogenized at 65°C in a two stage homogenizer (2000psig (138bar) first stage, 500psig (34.5bar) second stage)
5. Pasteurized mix was chilled to 4°C and hardened.

### Process - Freezing

1. Prior to freezing doublefold vanilla was added to the mix at a rate of 4 ml/kg.
2. Ice cream mix was frozen to a target of 80% over run in an continuous Crepaco freezer
3. Freezer exit temperature was -5°C.
4. Product was packaged in 500g cartons and cooled rapidly to -29°C.

### Results:

VLCI, like chicory inulin (DPw 33), produces ice cream mixes with increased viscosity and body. Ice cream resulting from these mixes can resemble higher fat ice creams depending on fat content, solids and accompanying carbohydrates. VLCI is particularly effective in achieving a fat-like quality in ice cream. Where 4% chicory inulin can be required to act as a fat mimetic, VLCI is effective at levels between 1.75 -2.6%

Mix pasteurized and homogenized under standard processing conditions results in a smooth viscous blend. Homogenization not only reduces the size of hydrated VLCI particles but also contributes to hydration itself.

Low fat ice cream with VLCI at levels of 2.6% in the mix is smoother and more like ice cream with 10% fat. In fact VLCI levels of less than 2.6% might be optimal for low fat ice cream depending on solids and sugar levels and the amount of time the mix is allowed cure prior to freezing.

By way of experiment, some containers were intentionally temperature abused meaning they were cycled between -20°C and -12°C. After 9 weeks ice crystal growth in the ice creams was evaluated. From a sensory perspective, VLCI ice cream with 3% fat showed the least amount of ice crystal growth, while ice cream with 3% fat and no VLCI had the largest crystals. 10% fat ice cream was in the middle. VLCI also retained its texture difference making it more like full fat.

### Example 3: Effects of very long chain inulin on low fat ice cream

### Methods

As a reference, a typical "economy" ice cream mix was produced to the following specifications: 10% butterfat, 11% non-fat dairy solids, and 36% total solids. Very Long Chain Inulin (DPw 60, GPC-MALLS) was used at a concentration of 2.6% w/w in the mix.

Formulas for full fat economy ice cream, 3% (low fat) ice cream and 3% (low fat) ice cream with VLCI are listed in Table 1. To maintain equivalent total solids concentration in the low fat ice creams, corn syrup solids were used to replace part of the butter fat and sucrose used the in 10% fat formula.

**Table 1. Mix formulas for 10% fat and 3% fat ice creams**

| INGREDIENT LIST (%) | 10% Fat | 3% Fat | VLCI |
|---|---|---|---|
| | Control | Control | 3% Fat |
| Cream | 21.56% | 2.31% | 2.54% |
| Whole milk | 48.87% | 57.34% | 55.00% |
| Condensed Skim | 14.91% | 21.19% | 21.70% |
| Sucrose | 14.50% | 10.00% | 10.00% |
| Corn Syrup Solids (36DE) | 0.00% | 9.00% | 8.00% |
| VLCI | 0.00% | 0.00% | 2.60% |
| Stabilizer/Emulsifier | 0.16% | 0.16% | 0.16% |
| Vanilla | | | |
| | | | |
| % Serum Solids | 11.04 | 13.07 | 13.07 |
| % Fat | 10.00 | 3.00 | 3.00 |
| % Total Solids Not Fat | 25.70 | 32.23 | 33.73 |
| % Total Solids | 35.70 | 35.23 | 36.73 |
| % Sugar Solids | 20.06 | 25.59 | 27.18 |

Total non-fat dairy solids (serum solids) level is routinely 1-2% higher in low fat ice cream formulas to accommodate the loss of butter fat. A commercial stabilizer blend (Keystone 9185, Mainstreet Ingredients, guar gum, xanthan gum, carrageenan, polysorbate 80, mono and diglycerides) was used at a range recommended by the manufacturer for 10% butter fat ice creams. Stabilizer concentration was held constant for all three formulas.

154 kgs (70 pounds) of mix was produced for each variable by blending the dry ingredients (sucrose, corn syrup solids, VLCI and stabilizer) and separately combining the condensed skim, whole milk and cream. The dry blend was then slowly added to the milk blend with agitation using a lightning mixer. Mixes were pasteurized at 82°C for 20 seconds in a Microthermix^{™} fluid processing system, cooled immediately to 65°C and homogenized in a two stage homogenizer (138/34.5 bar). Homogenized mixes were cooled to 4°C and aged for 4 hours prior to freezing.

Before freezing double fold, natural vanilla was added to each mix at a rate of 4mls/kg. Mixes were frozen in a Crepaco, single barrel, continuous ice cream freezer. During freezing the mix was aerated to 80% over run (0.62 grams/ml). Exit temperature for all variables was - 5C. Ice cream was packaged into pint containers and "hardened" at -27°C.

Ice cream mix viscosity was measured using a Brookfield RTV viscometer with an R-1 spindle at 2.5 to 20 RPMs. Ice cream was evaluated for sensory attributes after one day, one week and one month of storage followed by monthly intervals thereafter. At one week melt characteristics were measured by placing 250g of ice cream on a sieve at room temperature and measuring the amount of melted product over time. Geometry of the melted product was also observed.

Sensitivity to ice crystal growth during shelf life was determined by cycling the products between two different temperatures to accelerate growth rates and comparing them to control samples held a constant temperature. Temperature stressed ice cream was held at -25°C for 24 hours then transferred to -15°C and held for an additional 24 hours before returning to -25°C. This cycling process was repeated four times. Temperature cycled ice cream was compared to control samples stored at -27C for 8 weeks and -15C for 4 weeks. Ice crystals were imaged by cold stage microscopy. Size distribution was determined by digital image analysis of ice crystals in the micrographs.

Samples were analyzed for potential texture differences by measuring the force necessary to plunge a knife blade (3mm x 68mm) into the ice cream to a distance of 35mm at a rate of 3mm/second. Peak force in grams as well as force/time was recorded (Texture Technologies Corp, Scarsdale, NY).

### Results

Mixes containing VLCI produced on the Microthermix were smooth tasting. The texture of the mix with VLCI tasted creamier and was more "mouth coating" than its low fat counter part without VLCI. While it did not have the unctuousness of full fat mix, it approximated the 10% fat mix more than the 3% fat mix.

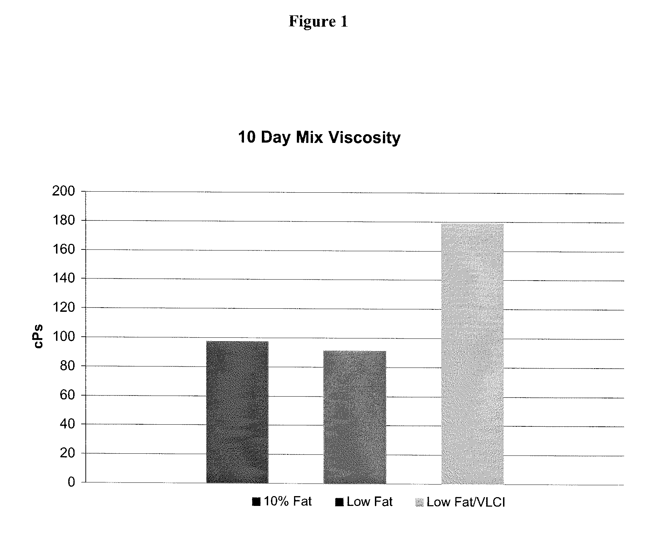

The viscosity of low fat mix with VLCI was higher than either the low fat or full fat mixes. In samples measured 10 days after preparation (Figure 1), viscosity of the VLCI containing mix was nearly double that of the 10% fat or the 3% fat mixes.

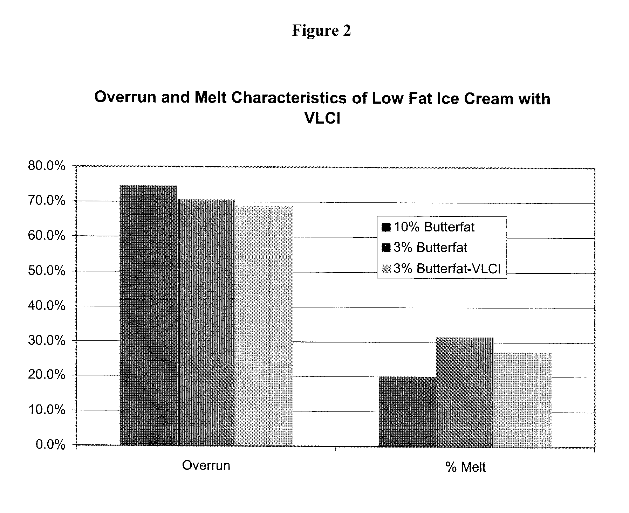

Overrun for all samples was targeted at ~80% and was measured after hardening at 71%. When measured after one week there was no significant difference between the three formulas (Figure 2). There was no evidence of shrink or loss of volume during storage. Melt profiles followed a pattern where the 3% fat ice creams "melted" more rapidly which is typical of low fat products. The method actually measures melt as well as flow or separation from the body of the ice cream so differences are a combination of actual melting rates and structure which can result from churned fat during freezing or from over stabilization of the ice cream mix. Melt characteristics did not suggest either defect in any of the samples.

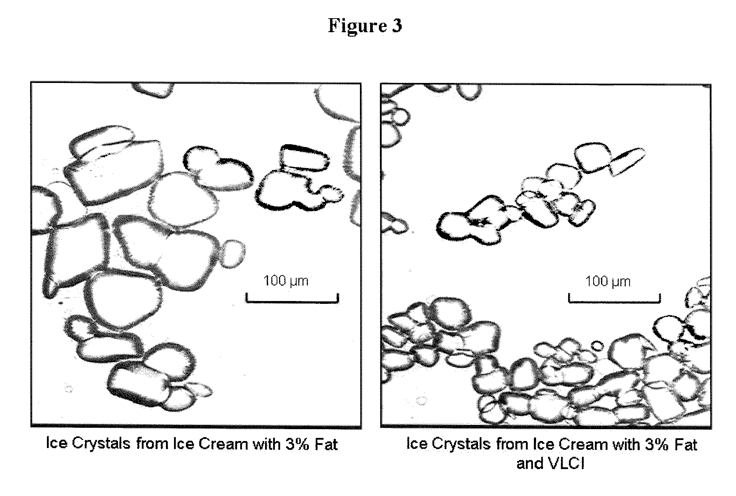

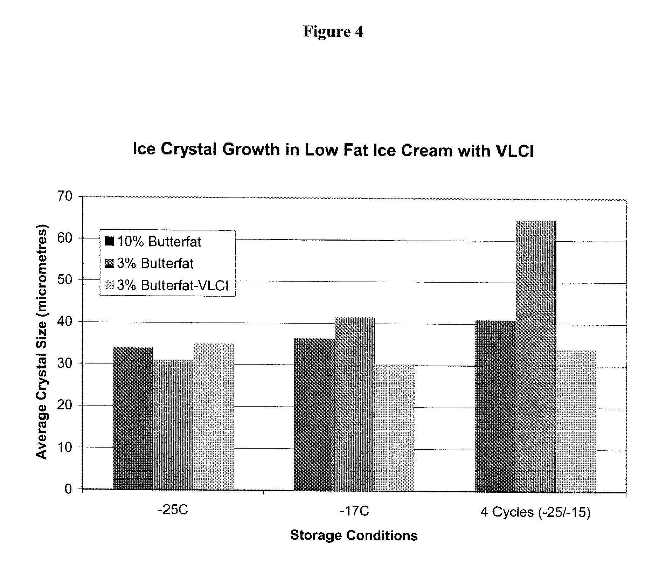

Ice crystal size in low fat ice cream (3%) doubled from 31 µm to 65 µm during temperature cycling (Table 2). Ice crystal size in 3% fat ice cream with VLCI did not change during temperature abuse suggesting that VLCI retards the growth of ice crystals in low fat ice cream (Figures 3 and 4). There was no significant crystal growth in full fat ice cream or ice cream with 3 % fat plus VLCI for any temperature storage condition (Figure 4). Crystals in full fat ice cream appeared to grow from an average of 34 µm to 41 µm after temperature cycling. However, while there was apparent crystal growth trend in the 10% fat ice cream, the change was not significant.

**Table 2. Ice crystal size distribution for ice creams containing 10% fat, 3% fat and 3% fat with VLCI after temperature cycling from -25°C to -15°C (all sizes in µm)**

| | Initial Crystal Size | | | Crystal Size After Temperature Abuse | | |
|---|---|---|---|---|---|---|
| | 10% Fat | 3% Fat | 3% Fat VLCI | 10% Fat | 3% Fat | 3% Fat VLCI |
| Mean size | 34,1 | 31,1 | 35,0 | 41,1 | 65,4 | 34,2 |
| Std. Dev. | 13,6 | 12,2 | 12,5 | 15,2 | 22,8 | 14,4 |
| Minimum | 9,0 | 3,1 | 6,6 | 3,9 | 5,7 | 4,6 |
| Maximum | 80,5 | 74,3 | 73,6 | 89,8 | 150,7 | 77,9 |
| C.V. (%) | 39,9 | 39,2 | 35,6 | 36,9 | 34,9 | 42,1 |
| Sample size | 559,0 | 457,0 | 465,0 | 434,0 | 359,0 | 461,0 |

### Sensory Analysis

Day One. From a sensory perspective VLCI containing ice cream was noticeably different from low fat ice cream without VLCI when tasted as soft ice cream (exiting the freezer at -5C) and after hardening at -27C. Low fat ice cream was "thin", lacked body and melting rapidly in the mouth while low fat ice cream with VLCI had more body and was retained longer in the mouth. As soft ice creams both had strong almost objectionable vanilla flavor profile common to low fat ice creams using natural vanilla. After hardening the harsh vanilla flavor was reduced in both ice creams, but to a greater extent in the ice cream with VLCI. Hardened VLCI ice cream developed even more body, retention in the mouth and creaminess.

One Week. There was little change from the sensory characteristics observed in the hardened ice creams at day one. The body and mouthfeel of the VLCI containing low fat ice cream was more like that of the 10% fat than the 3% fat.

One Month. All ice creams had noticeable ice crystals, but in a set of temperature abused samples, VLCI clearly had the least noticeable amount of ice crystals while the 3% fat sample without VLCI had the most. 10% fat was between the extremes.

### Texture Analysis

Penetration forces and rates were highly variable. 10% fat showed the highest forces necessary to penetrate the ice cream, while the 3% formulas were similar and appeared lower than the full fat control. However, given the variability of the results, it is difficult to conclude anything more than the fact that crystalline fat contributes to firmer textures and increased fracture resistance. This is not consistent with sensory perception that ice creams with VLCI were perceived as more cohesive and that panelists saw no difference in product firmness.

### Summary

Very long chain inulin changed the texture of 3% fat ice cream, making it smoother, longer lasting in the mouth and creamier than 3% fat alone. In minimally stabilized products the increase in cohesiveness was not perceived as chewy or gummy, a negative often associated with stabilizers and high levels of inulin. In temperature stressed samples, VLCI retarded ice crystal growth when compared to low fat ice cream without VLCI.

## Claims

1. The use of an inulin with a weight average degree of polymerization of between 50 and 103 for inhibing the growth of ice crystals in a frozen confection.

2. The use of claim 1, wherein the inulin is added to the ingredients for forming a frozen confection.

3. The use of claim 1 or 2, wherein the inulin is added in an amount of 0.1 % to 8 % by weight of the total composition for forming the frozen confection.

4. The use of one of claims 1-3, wherein the composition for forming the frozen confection comprises a fat present in an amount of 0.1 % to 18 % by weight of the total composition; a sweetener present in an amount of 2 % to 25 % by weight of the total composition; and non-fat milk solids present in an amount from 6 % to 15 % by weight of the total composition.

5. The use of claim 4, wherein the non-fat milk solids are of whey origin.

6. The use of one of claims 1-5, wherein the frozen confection with inhibited ice crystal growth in a temperature cycling process comprising:
holding the confection at 25°C for 24 h,
transferring the confection to -15°C and holding for additional 24 h,
returning to -25°C, wherein this sequence of steps is repeated four times.

7. The use of one of claims 1-6, wherein the frozen confection has a reduced calorie value.

8. The use of one of claims 1-7, wherein the frozen confection is an ice cream, a water ice, a frozen fruit juice, a frozen yogurt, a sherbet, an ice milk or a mixture thereof.

9. A method for inhibiting the growth of ice crystals in a frozen confection, the method comprising adding to the ingredients for forming a frozen confection an inulin with a weight average degree of polymerization of between 50 and 103.

10. The method of claim 9, wherein the inulin is added in an amount of 0.1 % to 8 % by weight of the total composition for forming the frozen confection.

11. The method of claim 9 or 10, wherein the composition for forming the frozen confection comprises a fat present in an amount of 0.1 % to 18 % by weight of the total composition; a sweetener present in an amount of 2 % to 25 % by weight of the total composition; and non-fat milk solids present in an amount from 6 % to 15 % by weight of the total composition.

12. The method of claim 11, wherein the non-fat milk solids are of whey origin.

13. The method of one of claims 9-12, wherein the method produces a frozen confection with inhibited ice crystal growth in a temperature cycling process comprising:
holding the confection at 25°C for 24 h,
transferring the confection to -15°C and holding for additional 24 h,
returning to -25°C, wherein this sequence of steps is repeated four times.

14. The method of one of claims 9-13, wherein the frozen confection has a reduced calorie value.

15. The method of one of claims 9-14, wherein the frozen confection is an ice cream, a water ice, a frozen fruit juice, a frozen yogurt, a sherbet, an ice milk or a mixture thereof.

16. A frozen confection with inhibited ice crystal growth comprising an inulin with a weight average degree of polymerization of between 50 and 103.

17. The frozen confection of claim 16, including inulin in an amount of 0.1 % to 8 % by weight of the total composition for forming the frozen confection.

18. The frozen confection of claim 16 or 17, wherein the total composition for forming the frozen confection comprises a fat present in an amount of 0.1 % to 18 % by weight of the total composition; a sweetener present in an amount of 2 % to 25 % by weight of the total composition; and non-fat milk solids present in an amount from 6 % to 15 % by weight of the total composition.

19. The frozen confection of claim 18, wherein the non-fat milk solids are of whey origin.

20. The frozen confection of one of claims 16-19, wherein the frozen confection has a reduced calorie value.

21. The frozen confection of one of claims 16-20, wherein the frozen confection is an ice cream, a water ice, a frozen fruit juice, a frozen yogurt, a sherbet, an ice milk or a mixture thereof.

22. A method for producing a frozen confection with inhibited ice crystal growth, the method comprising:
adding to the ingredients for forming a frozen confection an inulin with a weight average degree of polymerization of between 50 and 103;
combining the inulin and the other ingredients with shear mixing to form a composition; pasteurizing and homogenizing the composition;
freezing the composition.

23. The method of claim 22, wherein the inulin is added in an amount of 0.1 % to 8 % by weight of the total composition.

24. The method of claim 22 or 23, wherein the composition comprises a fat present in an amount of 0.1 % to 18 % by weight of the total composition; a sweetener present in an amount of 2 % to 25 % by weight of the total composition; and non-fat milk solids present in an amount from 6 % to 15 % by weight of the total composition.

25. The method of claim 24, wherein the non-fat milk solids are of whey origin.
